# DEMANDE DE BREVET EUROPEEN

(11) **EP 3 879 040 A1**
(43) Date de publication de la demande: **15.09.2021**
(21) Numéro de dépôt: 20161686.9
(22) Date de dépôt: 08.03.2020
(51) Int. Cl.: E04B 1/80, F16L 59/065, E04B 1/76

(54) **PANNEAU PORTEUR ISOLANT POUR COQUE SOUS VIDE DÉMONTABLE**

(71) Demandeur: Chavanne, Bruno, 37310 Azay-sur-Indre (FR)
(72) Inventeur: Chavanne, Bruno, 37310 Azay-sur-Indre (FR)

(57) **Abrégé**

Panneau porteur isolant sous vide de forme aplatie constitué d'une membrane souple étanche aux gaz enveloppant une structure rigide cellulaire stratifiée en couches d'ossatures tissées et en treillis dont les mailles se resserrent à l'approche de ladite membrane souple étanche extérieure permettant de créer ainsi une zone barrière isolante centrale comportant plus de 99,7 % de vide de matière solide ; panneau porteur isolant sous vide qui intègre dans tous ses chants latéraux et périphériques un système d'assemblage réversible permettant la jonction étanche à chants jointifs d'une pluralité de panneaux de nature semblable au dit panneau afin d'obtenir une coque sous vide autostable.

## Description

L'invention se situe dans le domaine de la production en usine de coques habitables ou non à haut niveau d'isolation thermique et phonique ; sans utilisation de béton, montables et démontables à l'infini.

Il est démontré que la production et l'utilisation du béton engendre entre 5 et 6 % des émissions de gaz à effet de serre anthropique dans le monde. De plus, les réserves de sable à grains anguleux se raréfient.

La gestion des bâtiments contribue pour 20 % aux émissions de gaz à effet de serre (chauffage, eau chaude, appareils domestiques ...).

L'industrie manufacturière de la construction représente également 20 % des émissions de gaz à effet de serre.

On connaît le problème des habitations construites en dur à une époque où leur environnement était sain et agréable, condamnées à être détruites suite à une dégradation environnementale. Le bâtiment n'est pas récupérable et sa démolition produit des déchets encombrants.

Le problème des habitations non isolées et dont la rénovation coûteuse ne donne pas entière satisfaction est connu.

On constate qu'à long terme, certains matériaux exposés à l'air et aux rayonnements solaires se dégradent par oxydation et photo-oxydation. L'humidité et le gel les dégradent également.

Les dégâts sur des habitations construites en zone inondable et/ou sismique entraînent des indemnisations assurantielles catastrophiques car ces habitations ne résistent ni aux entrées d'eau, ni aux séismes.

La présente invention propose de remédier à ces problèmes et se réfère au domaine technique de la fabrication de volumes mobiles par démontage et remontage rapides. Elle se réfère plus particulièrement à la fabrication d'une structure à isolations thermique et phonique intégrées de type coque dite en cocon. Elle se réfère également à la fabrication de coques pouvant mettre sous cloche un bâtiment existant.

Une structure de ce type est habituellement constituée de trois couches agencées en « sandwich » : Il s'agit premièrement, d'une peau externe constituée de plaques rigides ; deuxièmement, d'une couche intermédiaire en matériaux d'isolation thermique qui constitue une « rupture thermique » ; et troisièmement, d'une peau interne également constituée de plaques rigides.

La présente invention se caractérise par une couche intermédiaire isolante constituée à 99,8 % de vide de matière solide, à 100 % de vide de matière liquide et à 99,999 % de vide de gaz.

La présente invention n'utilise pas de plaques rigides.

L'utilisation de panneaux d'isolation sous vide ou PIV, incorporés ou non dans les murs, les planchers et les couvertures des bâtiments est connue. Abréviation : PIV ou VIP (Vacuum Insulation Panel).

Les panneaux de type PIV comprennent de façon connue en soit un matériau de cœur poreux isolant à structure cellulaire dont les cellules sont ouvertes et maintenues sous vide par une enveloppe barrière garantissant l'étanchéité aux gaz. Dans les panneaux PIV, tous les gaz présents sont évacués du matériau poreux avant un conditionnement sous vide au sein d'une enveloppe barrière souple généralement constituée d'un film métallisé thermosoudable.

Les matériaux de cœur poreux à structure cellulaire sont remplacés dans certains brevets par des plaques rigides entretoisées :
KR20150112434 : Les deux grandes faces des panneaux sont composées de plaques rigides comprenant des parties concaves et convexes écartées par des entretoises ou colonnes.
KR20170108398 et JP2003147872 : Les deux grandes faces des panneaux sont composées de plaques rigides écartées par des colonnes.
JP2017057624 et JP2007247372 : Les panneaux comportent des structures cellulaires prises en sandwich entre les deux plaques rigides.
FR2315054 : Les panneaux contiennent un empilement de treillis métalliques entre deux tôles soudées.
DE10204198 : Superposition de treillis en positions décalées.

Des structures porteuses de panneaux PIV ajoutées en façade de bâtiments sont décrites dans d'autres brevets :
FR2880639 : Rupteur de ponts thermiques rapporté pour une structure de bâtiment et destiné à supporter des panneaux PIV.
WO2013088075 - WO2013088077 - WO2014128379 : Ossature support de PIV qui réduit significativement les espaces entre les panneaux.
WO2015155438 : Ensemble d'isolation thermique incluant des panneaux PIV et procédé d'assemblage d'un tel ensemble.
WO2013086005 : Système isolant mural modulaire composé de PIV.
EP2860320 : Plancher thermiquement isolant incluant des panneaux PIV, module de plancher et kit d'assemblage.

Il n'est connu du demandeur qu'un seul modèle d'utilité décrivant un panneau isolant sous vide d'air qui soit dit porteur : CN202324240(U).

Les panneaux de type PIV ont l'inconvénient d'être fragiles, donc non porteurs. Cette fragilité rend obligatoire l'ajout d'une structure porteuse qui n'est pas isolante. Dans ce cas, les ponts thermiques entre l'extérieur et l'intérieur du bâtiment sont inévitables. De plus, il est difficile de contrôler le niveau de vide à long terme des panneaux de type PIV, à 10, 30, 100 ans et plus.

L'assemblage de panneaux porteurs PIV de la présente invention permet d'obtenir une coque sous vide. C'est pourquoi la description définira à la fois la conception, la fabrication, l'assemblage de panneaux PIV et de sa coque associée. On peut considérer que la coque obtenue n'est qu'un unique panneau PIV.

Pour rappel, on sait que la meilleure isolation thermique qui soit est le vide de tout gaz. Afin de rigidifier, de rendre plus solide, d'économiser des matériaux et d'insonoriser la structure des panneaux et de la coque, l'invention utilise un effet physique : l'effet dit de Magdebourg.

Quand un volume est sous vide de tout gaz, la force exercée sur les parois de ce volume est égale à la pression atmosphérique moyenne, soit 1013 hPa ou mbar au niveau de la mer. Cette force va être utilisée dans la totalité de la coque obtenue par l'assemblage des panneaux porteurs isolants sous vide de la présente invention.

Dans la présente invention, la couche intermédiaire isolante des panneaux et de la coque est constituée principalement de vide de matière solide et liquide et de tout gaz. En raison de ce vide, la pression atmosphérique va s'exercer sur la totalité des enveloppes barrières enrobant les panneaux et la coque.

Afin de garder un volume constant à l'intérieur de l'enveloppe souple étanche d'un panneau ou d'une coque tout en créant un minimum de ponts thermiques, il sera placé dans cette enveloppe des treillis entretoisés par des colonnes. Les colonnes étant de faible section, leur volume est réduit par rapport au volume de la couche isolante (0,2%). Ce volume très contenu des colonnes limitera la transmission des flux thermiques par conduction. Les volumes intérieurs des panneaux et de la coque, les treillis et les colonnes seront soumis à un vide de gaz poussé, ce qui supprimera la transmission des flux thermiques par convection. Ces colonnes supporteront les treillis constitués de barres entrecroisées à profil rectangulaire dont le matériau constitutif est de nature isolante. Le volume de la couche constituée des colonnes sera donc la couche isolante des structures « sandwichs » constituant les panneaux et la coque.

La demande WO2017162388 décrit deux enveloppes, l'une interne, l'autre externe, renfermant un matériau d'isolation de type granules sphériques poreux et rigides. Les granules sont versés en vrac sans aucun liant et n'ont donc que de faibles points de contact entre eux, ce qui limite la transmission des flux thermiques par conduction.

Afin d'améliorer l'isolation ainsi que la rigidité de la structure ou coque du bâtiment, cette demande de brevet antérieur propose de mettre sous vide d'air l'ensemble du volume de granules ainsi que les enveloppes composées de panneaux rigides jointifs, ceci grâce à une peau étanche.

Dans la demande WO2017162388, il est proposé plus précisément que la totalité de la superstructure d'un bâtiment soit composée d'une unique coque continue isolante, dite en cocon, et que tous les éléments soient de composition identique. Les murs de refend et les planchers sont de la même composition que la coque. Un élément ne peut être qualifié de mur, de plancher, de toit, que par sa position dans l'espace et par rapport aux autres éléments. La structure de cette coque est constituée d'une pluralité de plaques rigides jointives enserrant des granules légers poreux, rigides et sphériques, qui remplissent la totalité du volume formé par les plaques. Le volume global de la superstructure est constitué d'une pluralité de plaques rigides jointives formant une enveloppe externe qui englobe tout le bâtiment. Les pièces d'habitation ou d'accueil forment des sous-volumes dont les parois sont constituées par une pluralité de plaques rigides jointives formant des cavités internes. L'étanchéité de la coque unique, dite en cocon, est assurée par une peau étanche qui forme une sur-enveloppe globale. Les sous-volumes, qui sont des unités isolées, et qui constituent les pièces d'habitation ou d'accueil, sont immergés dans les granules.

La présente demande propose :
- De supprimer les granules poreux rigides dont le matériel de production est coûteux ainsi que l'énergie primaire consommée pour leur transport et leur fabrication. Les granules ont un coût prohibitif car la couche isolante intermédiaire est volumineuse et constitue la majeure partie du volume global de la structure.
- De supprimer les plaques rigides qui forment les enveloppes et de ne garder que des peaux souples étanches.
- De rendre le montage et le démontage de la structure porteuse faciles et rapides sans utilisation de liaisons définitives.
- De diviser le volume de la coque en structures élémentaires sous forme de panneaux prêts à monter qu'il suffit d'assembler.
- De joindre ces panneaux par des surfaces de liaison étanche.
- De créer des coques qui soient aussi bien enveloppantes que couvrantes et ainsi de pouvoir les utiliser comme couvertures extérieures isolantes de bâtiments déjà existants.
- De ne pas limiter l'utilisation des coques obtenues aux seuls bâtiments habitables ou non.
- De conserver la rigidité de la structure porteuse même en cas de rupture de vide du volume global de la coque.
- De pouvoir déconnecter un panneau accidentellement percé du volume sous vide global de la coque.

### Résumé de l'invention

Panneau porteur isolant sous vide de forme aplatie constitué d'une structure rigide cellulaire enveloppée par une membrane souple étanche aux gaz supportée par des ossatures tissées ou en treillis empilées en couches superposées dont les maillages sont de plus en plus fins à l'approche de ladite membrane extérieure dudit panneau.

Procédé d'assemblage desdits panneaux porteurs isolants sous vide permettant d'obtenir une coque sous vide autostable qui peut être démontée et remontée indéfiniment sans modification temporaire ou définitive de leurs caractéristiques physiques intrinsèques.

L'enveloppe de chaque panneau est constituée d'un tissu de fibres synthétiques supportant un film polymère métallisé étanche aux gaz.

La peau enveloppante d'un panneau est supportée intérieurement par deux treillis dont la matière est thermiquement isolante et rigide. Ces deux treillis sont entretoisés à intervalles réguliers par des colonnes.

La peau qui enrobe un panneau se subdivise en peaux externe et interne si l'on prend en considération l'assemblage complet d'une coque.

Le volume formé par l'assemblage des panneaux, donc le volume de la coque, est mis sous vide de tout gaz. Cette mise sous vide permettant de rigidifier et de rendre isolante ladite coque.

De la même façon, chaque panneau est mis sous vide et l'ensemble des panneaux mis sous vide forme une coque habitable ou non.

Les barres constituant les treillis sont avantageusement en lamelles de bois orientées et collées afin d'être isolantes. C'est du bois stratifié de type OSB. Une structure en bois aggloméré va fluer sous une charge constante due à la pression atmosphérique. Afin de remédier à cela, le bois aggloméré va être armé d'une tige en acier formée et disposée de telle façon qu'elle fasse office de triangulation interne des barres.

Le vide de gaz est contrôlé à vie par une pompe à vide installée in situ. L'ensemble peaux, treillis et colonnes qui sont alternativement inclinées, est rigidifié par la pression atmosphérique qui s'exerce sur lui.

Les différents panneaux constituant la coque sont solidement liés entre eux grâce à la pression atmosphérique. Cette liaison est sécurisée par des coutures constituées de câbles.

Les différents panneaux constituant la coque ont les plus grandes surfaces de jonction possibles soumises à la pression atmosphérique.

Deux solutions de sécurisation seront proposées en option :
- Les fonctions d'isolation et de rigidification des panneaux et de la coque seront assurées par un volume de vide et les fonctions de liaison et de contreventement des panneaux seront assurées par un circuit de vide indépendant. Dans ce cas, le volume de vide et le circuit de vide seront isolés l'un de l'autre. Les circuits de liaison et de contreventement des panneaux resteront opérationnels si une rupture de vide du volume assurant l'isolation et la rigidification des panneaux se produit.
- Les volumes de vide des différents panneaux seront indépendants entre eux. Si une rupture de vide se produit sur un panneau, cela sera sans conséquence pour la stabilité et l'isolation de la coque.

### Exposé des problèmes à résoudre

Le premier problème à résoudre est de limiter l'effondrement de la structure sur elle-même par la pression atmosphérique qui s'exerce sur toutes ses surfaces extérieures en raison du vide d'air intégré à ladite structure. Pour cela il faut maintenir à une distance fixée à l'avance les plus grandes faces des peaux constituant les volumes des panneaux. Des entretoises constituées de barres rectangulaires sont placées entre les faces des peaux afin de conserver un écartement constant entre celles-ci.

Le deuxième problème à résoudre est de limiter les ponts thermiques entre les faces des peaux. Les barres constituant les entretoises devront être les plus isolantes possible. L'utilisation du bois à la place d'un métal répond à ce problème, mais le bois flue avec la force exercée par la pression atmosphérique et avec le temps. Pour cela les barres en bois seront armées au même titre que du béton armé. Afin de limiter les ponts thermiques, des colonnes rigides de faible section maintiennent écartées les barres isolantes constituant des treillis.

Le troisième problème à résoudre est de créer une enveloppe étanche résistant à la pression atmosphérique et à l'oxydation. Pour cela elle sera composée d'une membrane souple étanche métallisée supportée par un tissu constitué de fibres synthétiques pétrochimiques ou minérales ou de fils métalliques.

Le quatrième problème à résoudre est de fixer les tissus. Pour cela les tissus seront collés sur les bordures ou chants des panneaux et serrés par leur réunion et leur pressage.

Le cinquième problème à résoudre en cas de rupture de vide d'air sera le maintien du contreventement de l'ensemble des panneaux de la structure. Pour cela les panneaux seront couturés entre eux par des câbles démontables. En option, un circuit de vide sécurisé indépendant du volume global pourra assurer la liaison des panneaux entre eux.

Le sixième problème à résoudre est le maintien de la rigidité des panneaux en cas de rupture de vide d'air, les panneaux étant parfaitement rigides quand ils sont soumis à la pression atmosphérique. Pour cela les vides des panneaux doivent être indépendants entre eux.

Le septième problème à résoudre est de supprimer toute trace d'humidité dans la couche isolante. L'humidité sera transformée en vapeur par le vide poussé.

### Listage des figures

Le descriptif détaillé et explicatif des figures a été placé plus loin dans cette description pour une meilleure concision.
Figure 1 : Écorché d'un panneau rond porteur isolant sous vide.
Figure 2 : Écorché d'un panneau carré porteur isolant sous vide.
Figure 3 : Vue éclatée de l'écorché d'un panneau rond.
Figure 4 : Panneau identique à la figure 2 avec un seul treillis.
Figure 5 : Coupe partielle d'une structure porteuse composée d'un tissu et de colonnes entretoisant deux treillis à mailles triangulaires.
Figure 6 : Assemblage de deux panneaux biseautés. Un panneau a un cadre d'embrasure en son centre et comporte des centreurs.
Figure 6a : Coupe détaillée d'un centreur coulissant.
Figure 7 : Zoom de deux treillis composés de barres entrecroisées renforcées par des armatures et entretoisées par des colonnes inclinées.
Figure 8 : Vue de côté des deux treillis entretoisés par les colonnes inclinées alignées avec les sommets des ondulations des armatures.
Figure 9 : Vue d'une couture composée d'un câble de couture et de ses deux traversées de paroi à ses extrémités.
Figure 9a : Zoom sur une traversée de paroi du câble de couture.
Figure 9b : Zoom sur des platines supports de tubes de guidage.
Figure 10 : Vue de deux bordures droites reliées par une couture.
Figure 10a : Zoom sur les traversées de paroi du câble de couture.
Figure 11 : Coupe de deux bordures biseautées couturées montrant la plupart des éléments constituant une coque et des panneaux.
Figure 12a et 12b : Zoom sur les joints en silicone dans les angles.
Figure 13 : Vue en coupe et en perspective d'une traversée de paroi.
Figure 14a : Plan en coupe de l'arrêt de câble serti.
Figure 14b : Plan en coupe du serre-câble vissé.
Figure 15 : Coupe d'un bloc-baie monté dans un cadre d'embrasure.
Figure 16 : Vue éclatée d'un bâtiment avec vide sanitaire.
Figure 17 : Coupe partielle d'un bâtiment avec son mur de pignon ouvert, sa pompe à vide et son orifice unique de prise d'air.
Figure 18 : Coupe de la structure d'un bâtiment en dur existant isolé par des panneaux porteurs sous vide couverts par un toit photovoltaïque.

### Description de l'invention

1) L'invention propose la fabrication d'un panneau porteur isolant sous vide enveloppé par une membrane souple étanche aux gaz qui est supportée par une structure rigide cellulaire composée de tissus et de treillis constituant chacun une ossature-support en couches superposées.
   Le volume de chaque panneau isolant est formé par deux treillis sensiblement parallèles contreventés par le tissu tendu et entretoisés par des colonnes. Tissu, treillis et colonnes constituent ainsi une structure porteuse supportant la membrane étanche. De même, le volume isolant sous vide de la coque est enrobé par des membranes étanches entretoisées par les tissus, les treillis et les colonnes.
   Le volume global de la structure est délimité par une peau externe composée de membranes. De même, les sous-volumes de la structure sont délimités par des membranes internes. Les panneaux constituant la coque sont enrobés par les membranes externes et internes.
   Les deux treillis constituent des panneaux car ils sont ceinturés par des bordures. Sans les bordures, il n'y aurait pas de panneaux mais une unique structure porteuse. L'assemblage des panneaux se fait par le rapprochement des bordures, ce rapprochement créant des jonctions.
2) L'invention propose également qu'une coque autostable formée par l'assemblage étanche à bords jointifs d'une pluralité de panneaux porteurs isolants sous vide tels que proposés dans cette demande, puisse être démontée et remontée sans changement temporaire ou définitif des caractéristiques physiques intrinsèques desdits panneaux.

Comme solution non exclusive, l'invention propose que les liaisons des panneaux entre eux d'une structure composée d'une coque formant un volume isolant sous vide soient assurées par des coutures composées de câbles ondulants gainés par des circuits rigides étanches ou non.

Les chants ou bordures des panneaux sont parcourus par des câbles ondulants traversant et retraversant une bordure de panneau et alternativement la bordure du panneau adjacent. Les panneaux sont donc couturés entre eux par des câbles.

Des circuits gainant les câbles de couture ondulent de la même façon que les câbles de couture et sont donc utilisés comme guidage de ceux-ci. Les éléments de guidage font donc passer le câble d'une bordure ou chant de panneau à l'autre bordure ou chant du panneau adjacent, ceci alternativement. Les liaisons mécaniques entre les panneaux sont donc assurées en permanence par les câbles de couture. Un câble de couture relie uniquement un seul côté de panneau afin de faciliter son démontage ou le démontage de son panneau adjacent. Un câble peut relier plusieurs côtés mais c'est au détriment de la facilité de remplacement d'un panneau.

Pour un volume habitable ou une coque couvrant un bâtiment, les embrasures nécessaires à la création des baies de portes et de fenêtres, au passage d'une pièce à une autre pièce dans un mur de refend, au passage des aérations, des conduits de fumée, sont ménagées dans les peaux se faisant face. Un tuyau ou un câble traversera la structure dans un cylindre métallique bridé sur les peaux à ses deux extrémités. Les deux paires de brides seront étanchéifiées par des joints polymère plats ronds.

Pour un bâtiment d'élevage, un local technique, un silo de stockage, un mobile home, une chambre froide, des embrasures seront nécessaires.

Chaque embrasure est ceinturée par un cadre ou un tube.

Les tissus sont collés sur les bordures ou chants des panneaux, sur les renforts de rives, sur les chants ou tranches extérieurs des barres ainsi que sur les cadres des embrasures.

Le volume fermé et étanche de la coque, délimité par les membranes et les cadres des embrasures, est soumis à un vide poussé, inférieur à 1 hPa. La mise sous vide complète de gaz se fera quand les molécules de gaz enfermées dans les différents matériaux du volume fermé seront éliminées.

C'est pourquoi le volume interne de la coque est relié à une pompe à vide de façon permanente. L'activité de cette pompe sera enregistrée.

Les volumes de vide des panneaux sont interconnectés entre eux par l'intermédiaire des perforations de leurs bordures destinées au guidage des câbles. Un seul orifice de prise de vide est nécessaire est suffisant pour assurer le vide dans la totalité de la coque.

Le vide de gaz assure la rigidité de l'ensemble par effet dit de Magdebourg. Les planchers étant rigidifiés, ils ne peuvent pas vibrer et sont donc aussi silencieux qu'un plancher en béton. La conductivité thermique globale de la coque est inférieure à 0,004 watt/ [mètre. °K). La qualité optimale des isolations thermique et phonique sera maintenue durant toute la durée de vie de la coque grâce à la pompe à vide.

Les barres à profil rectangulaire des treillis sont composées de lamelles végétales orientées et agglomérées par collage sous pression. C'est du stratifié de type OSB. Les barres sont renforcées par une tige ronde en acier insérée dans les barres et parcourant en ondulant ou en zigzaguant la longueur desdites barres en se rapprochant alternativement d'un chant à l'autre chant opposé de la barre.

Dans les planchers intérieurs, les assises de bâtiments et les murs de refend qui ne nécessitent pas d'isolation thermique performante, une structure cellulaire composée d'un seul treillis est suffisante, ses barres entrecroisées sont de simples panneaux OSB non armés.

### Descriptif explicatif des figures

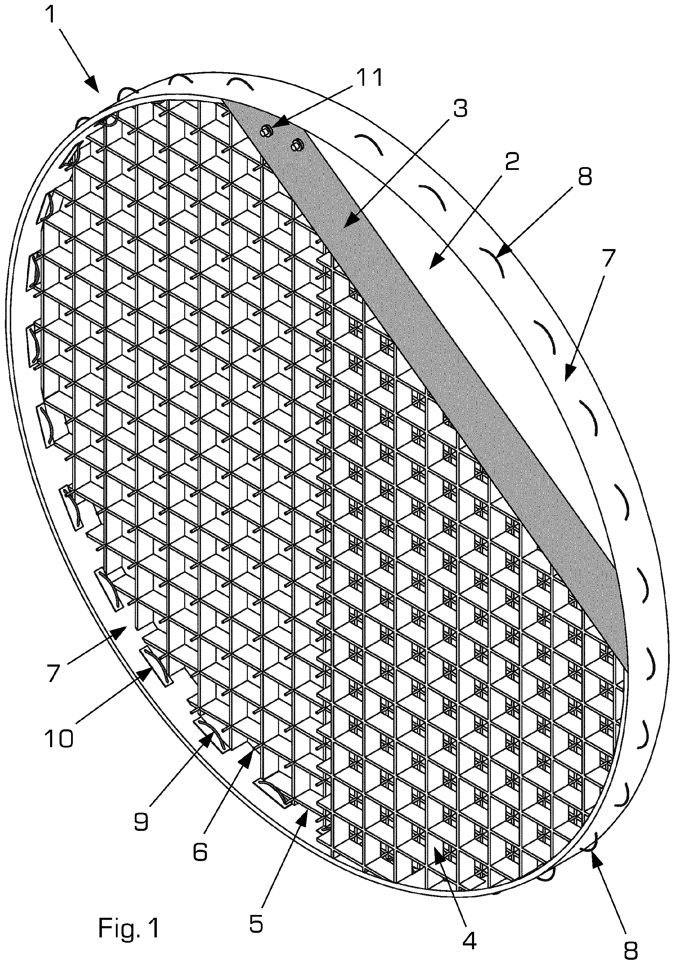

Figure 1 : Cette vue en perspective montre l'écorché d'un panneau porteur isolant sous vide (1) de forme ronde à bordures droites (7). La structure porteuse intérieure est composée de deux treillis (4) sensiblement parallèles à grosses mailles entretoisés par des colonnes (6) placées aux intersections des barres (5). Cette structure est ceinturée par la bordure droite circulaire (7). La structure composée des treillis et des colonnes est enveloppée par une couche de tissu (3). L'enveloppe en tissu est donc soutenue par les deux treillis (4) à grosses mailles. L'enveloppe de tissu (3) soutient une couche barrière étanche (2), cette couche barrière étant composée d'un film thermosoudable métallisé. Le premier treillis (4) soutenant la peau (2) est coupé en son milieu laissant apparaître le deuxième treillis et les colonnes (6) sur la moitié du panneau. Les platines (10) supportent les tubes de guidage (9) du câble de couture (8) qui ceinture le panneau. Les deux mécanismes (11) font office de traversées de parois et sont destinés au passage du câble de couture.

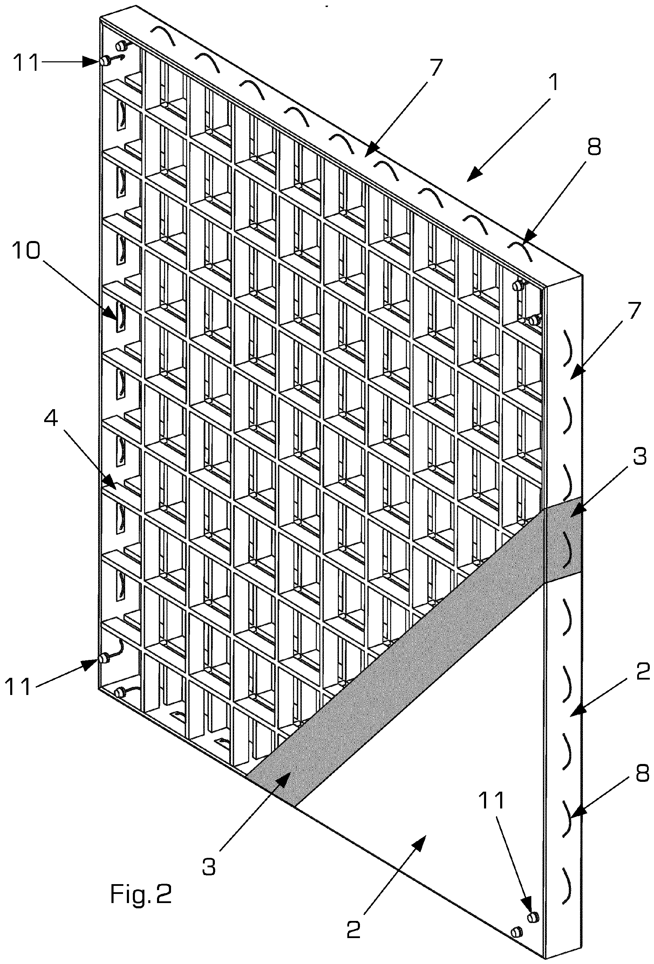

Figure 2 : Cette vue en perspective montre l'écorché d'un panneau porteur isolant sous vide (1) de forme carrée à bordures droites (7). Sa description est identique à celle de la figure 1. Les huit traversées de parois (11) font office de tendeurs des quatre câbles de couture. Chaque côté du panneau dispose de son propre câble de couture. Ce panneau parallélépipédique à bords droits sera plus particulièrement un plancher, un mur de refend ou une cloison intérieure d'un bâtiment.

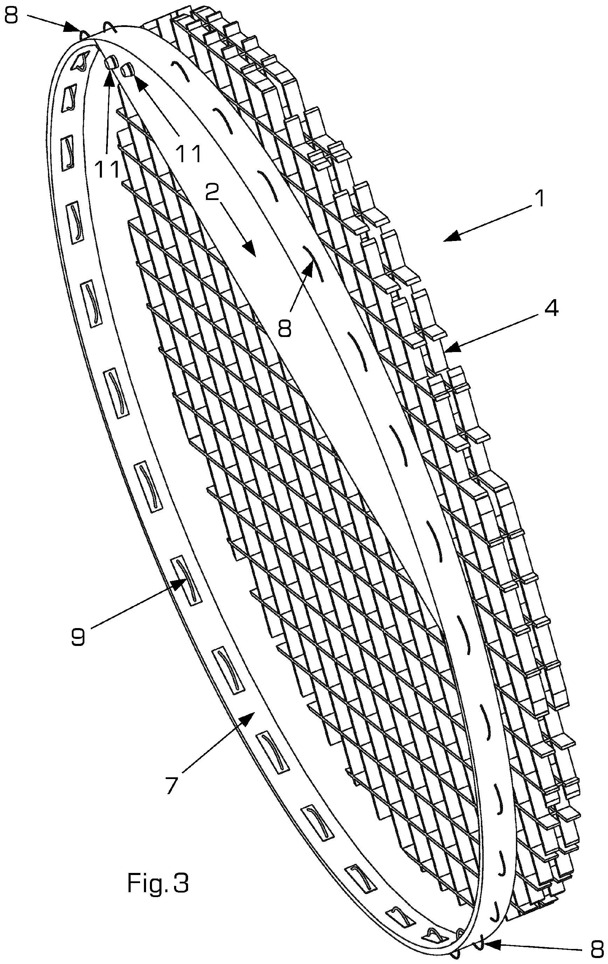

Figure 3 : Vue éclatée de l'écorché d'un panneau rond avec sa bordure circulaire (7) et son câble de couture (8) fixé à l'intérieur des traversées de parois (11). La structure porteuse constituée des deux treillis (4) est cellulaire. Les mailles des treillis (4) sont deux fois plus fines que le panneau carré de la figure 2. L'épaisseur de ce panneau est deux fois moindre que le panneau rond de la figure 1. Les platines (10) des guides (9) sont arrondies pour épouser la forme circulaire de la bordure.

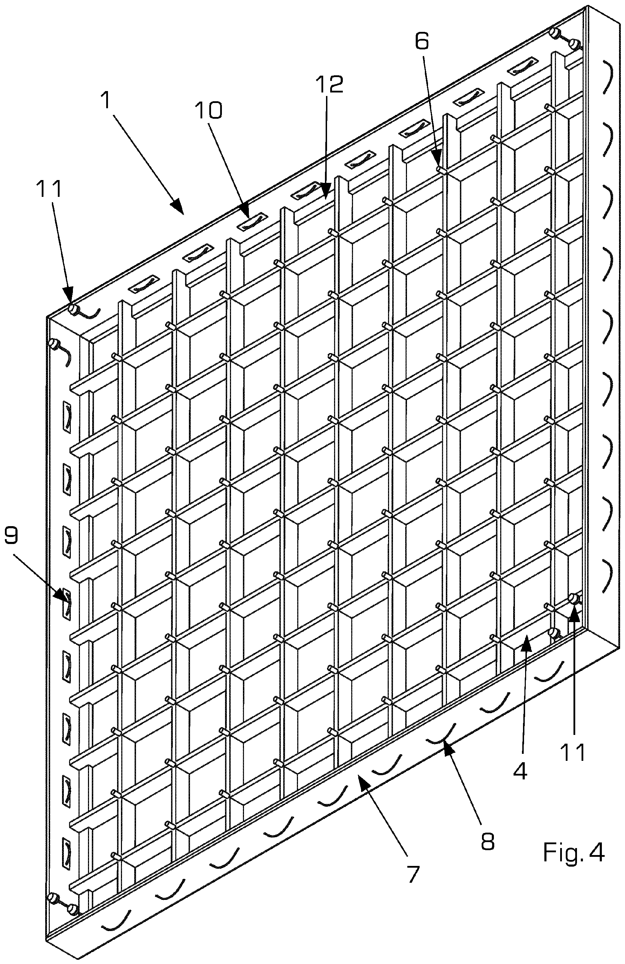

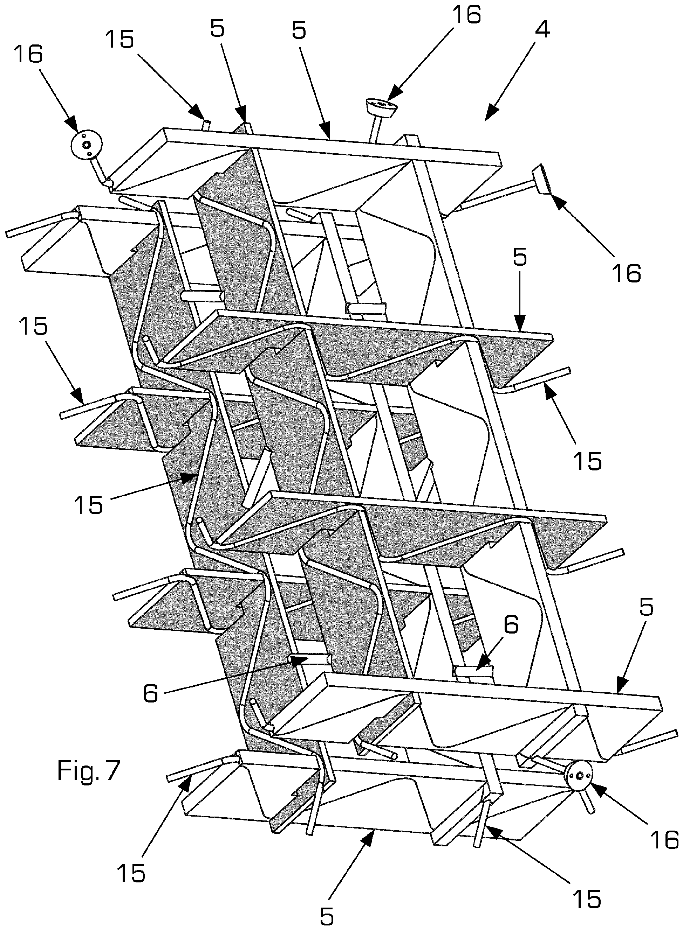

Figure 4 : Vue en perspective d'un panneau identique à la figure 2 mais avec un seul treillis laissant ainsi apparaître les colonnes. Les quatre bordures (7) sont renforcées par les renforts de rives (12). Ces renforts sont triangulés intérieurement par des armatures de la même façon que les barres (5) qui constituent les treillis (4) (voir figure 7). Ces renforts de rives sont destinés à absorber les forces de tension multi directionnelles exercées par les tissus (3) et les membranes étanches (2) subissant la pression atmosphérique quand le volume intérieur des panneaux est sous vide. Deux renforts de rives (12) ceinturant intérieurement les deux chants des bordures (7) sont nécessaires. Un seul est représenté.

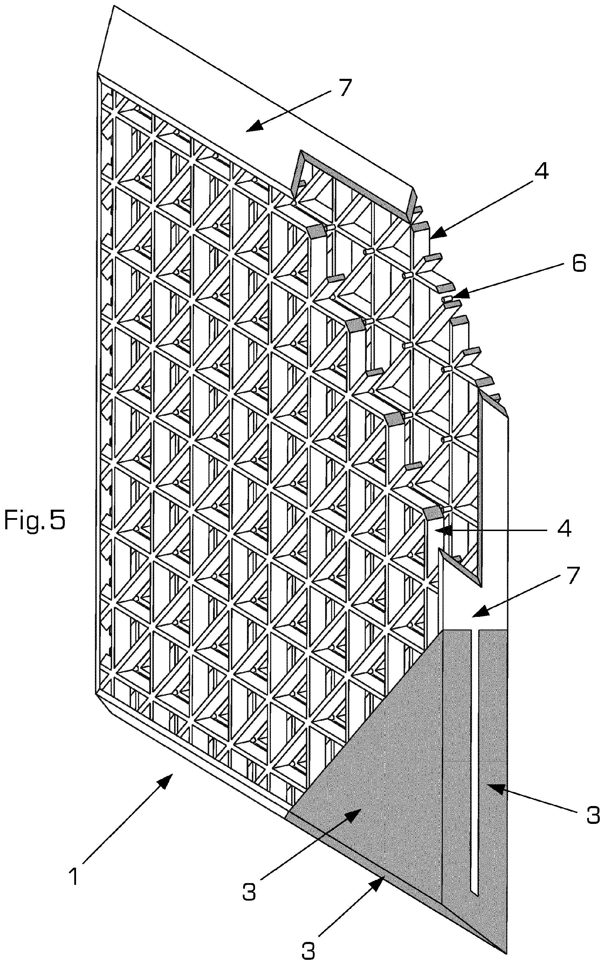

Figure 5 : Perspective coupée d'une structure porteuse (1) à chants biseautés dont les mailles sont triangulées. Le tissu (3) et les deux treillis (4) entretoisés par les colonnes (6) constituent la structure porteuse de l'enveloppe étanche et de la coque du bâtiment. La structure porteuse du bâtiment est divisée en panneaux, chacun ceinturé par les bordures (7).

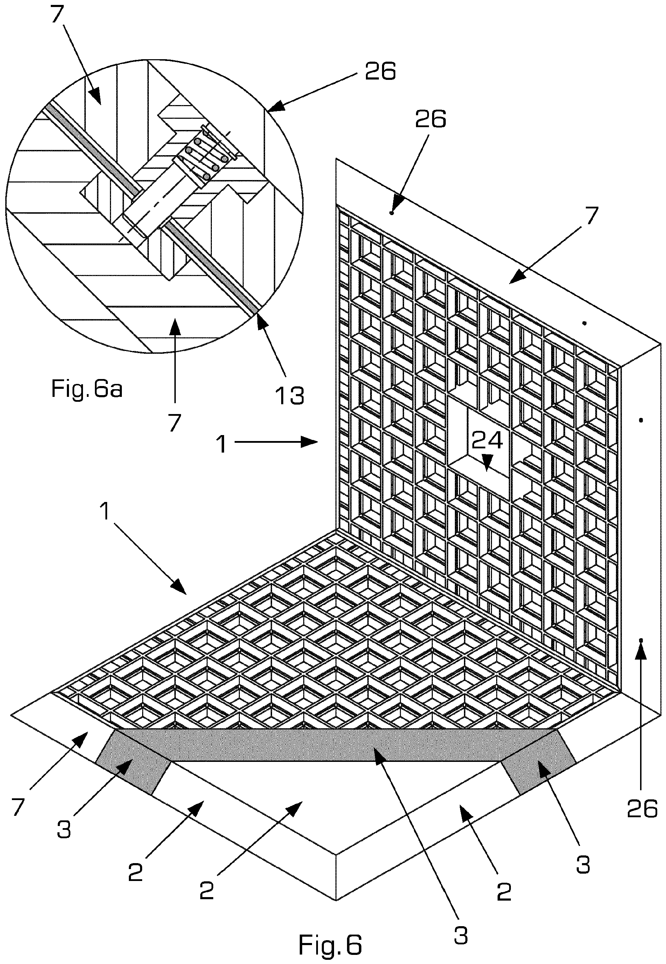

Figure 6 : Vue en perspective de l'assemblage de deux panneaux biseautés de forme tronco-pyramidale. Le panneau biseauté vertical a une embrasure en son centre. L'embrasure est bordée par un cadre traversant (24) sur lequel sera collé le tissu (3). Le cadre (24) devra être renforcé par des renforts de rives (12) placés intérieurement au niveau de ses chants ou tranches et qui ne sont pas représentés. Les centreurs (26) servent à positionner les panneaux, ils sont répartis autour des panneaux et sont rétractables afin de faciliter le montage des panneaux.

Figure 6a : Coupe détaillée d'un centreur (26). Le centreur poussé par un ressort coulisse dans un fourreau pour faciliter le montage du panneau quel que soit l'angle de la bordure (7). Le panneau sera positionné quand le centreur s'insérera dans la douille métallique du panneau adjacent.

Figure 7 : Zoom sur six mailles de deux treillis (4) composés de barres (5) entrecroisées, renforcées par des armatures ondulantes (15) et entretoisées par des colonnes (6) alternativement inclinées suivant des angles opposés. Six barres sont coupées dans leur plan médian montrant les armatures ondulantes. Les armatures sont composées d'une tige ronde en acier fixée à ses extrémités par deux écrous coniques (16) vissés dessus et qui sont utilisés comme disques de pression des bordures (7) sur les barres (5). Les barres sont ainsi triangulées intérieurement. La force exercée par la pression atmosphérique ne pourra pas affaisser ces barres lamellées-collées-armées quelle que soit la durée de la pression.

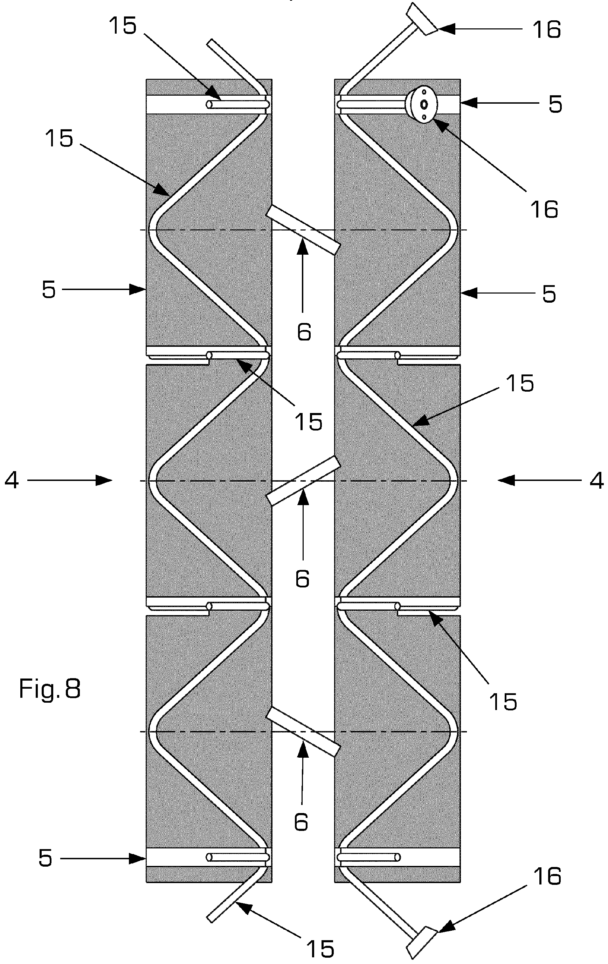

Figure 8 : Vue de côté des deux treillis de la figure 7, les colonnes inclinées sont alignées avec les sommets des ondulations des armatures.

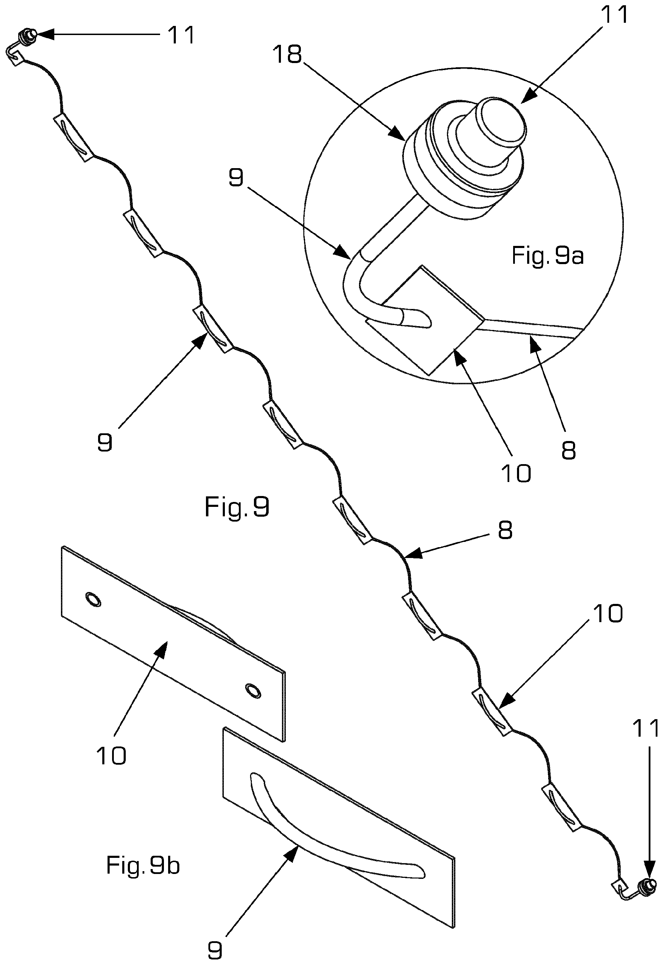

Figure 9 : Vue d'une couture qui traverse deux bordures (7), elle est composée d'un câble (8) et de ses traversées de parois (11) incluant un arrêt de câble dans l'une et un serre-câble dans l'autre. Chaque ondulation traverse les deux bordures (7) des panneaux adjacents. Le câble est guidé par des guides-câble (9) cintrés supportés par des platines (10).

Figure 9a : Zoom sur une traversée de paroi (11) d'une des extrémités du câble (8). La bride (18) est à l'intérieur de l'enveloppe.

Figures 9b : Zoom sur des éléments de guidage (9) du câble de couture (8) et de leurs platines de fixation (10).

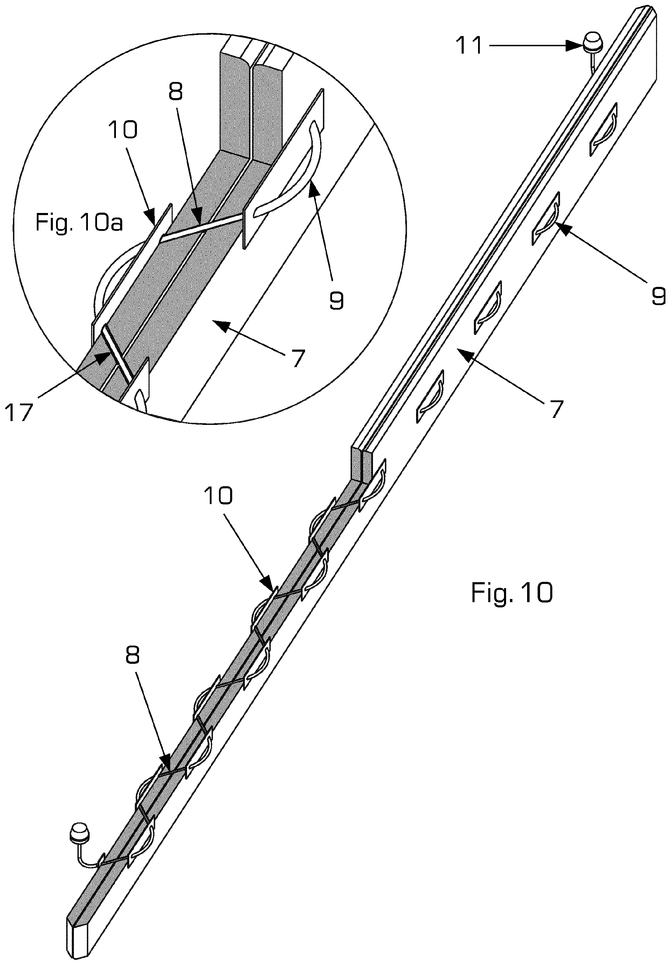

Figure 10 : Vue de deux bordures droites (7) reliées par une couture avec une coupe partielle montrant le trajet du câble (8). Les tubes guides-câble (9) sont soudés sur une platine (10).

Figures 10a : Zoom sur des tubes de guidage (9) du câble de couture (8) et de leurs platines de fixation (10). À noter les perçages obliques (17) qui guident le câble à travers les bordures (7).

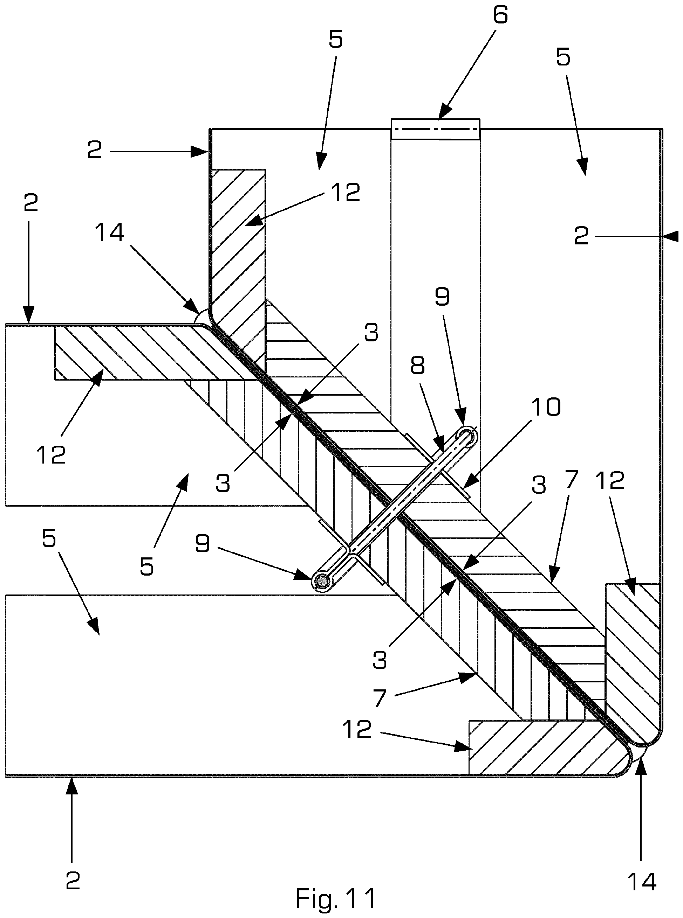

Figure 11 : Coupe de deux bordures en biseau (7) et montrant la plupart des éléments constituant une coque. Dans cette vue, les éléments de guidage (9) sont constitués de deux équerres [10] matricées et soudées ensemble. Cette vue montre la rigidification des bordures (7) par des renforts de rives (12) et empêchant le cintrage desdites bordures par les forces de tension des tissus [3]. Les tensions s'exercent sur les renforts armés (12) au lieu de s'exercer sur les chants des bordures (7).

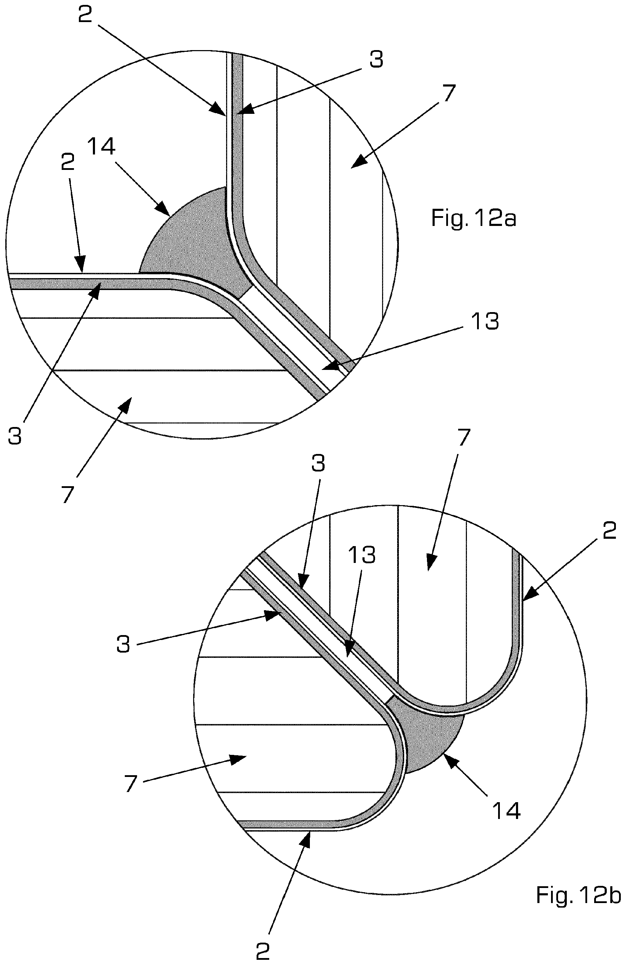

Figures 12a et 12b : Zoom sur les joints en silicone (14) des angles de la coque ainsi que sur le joint (13) situé à la jonction des deux bordures (7). Le joint (13) est optionnel si les membranes (2) sont épaisses et souples et ne sont pas métallisées à leur jonction.

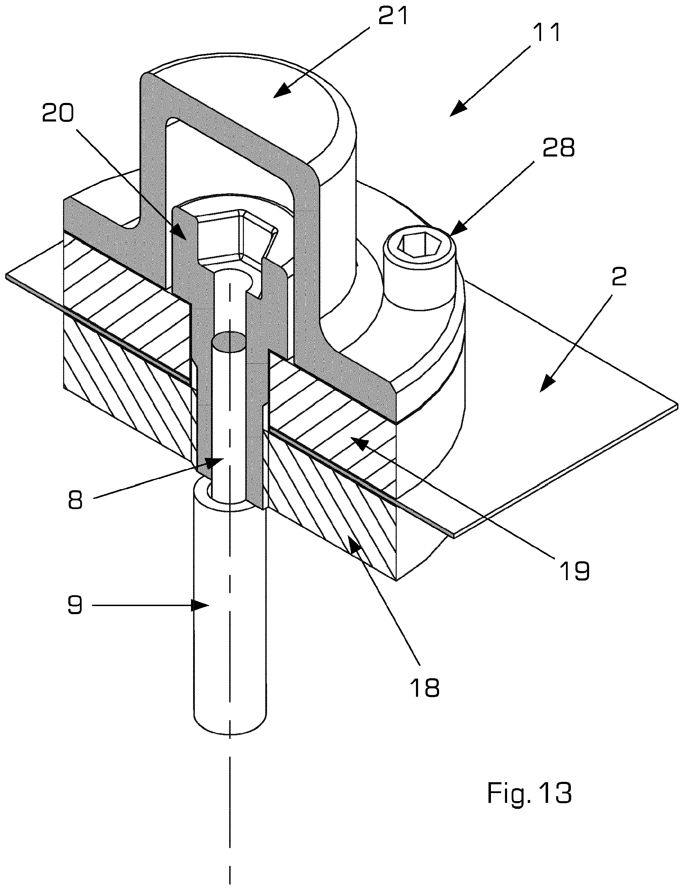

Figure 13 : Vue en coupe et en perspective d'une traversée de paroi (11). Cette traversée est composée de deux brides (18) et (19) serrées sur la peau (2) par une seule vis CHc (20) percée sur son axe dans toute sa longueur. Ce perçage permet ainsi au câble (8) de traverser la peau (2) en étant guidé par la vis (20). Cette traversée peut être montée sur un renfort de rive (12), la vis (20) sera plus longue. Un joint polymère sera inséré entre la peau (2) et la bride (19). Le câble est ensuite enfilé dans le guide-câble (9). La traversée de paroi (11) est fermée par la cloche (21) serrée hermétiquement par trois vis CHc (28) sur la bride (19).

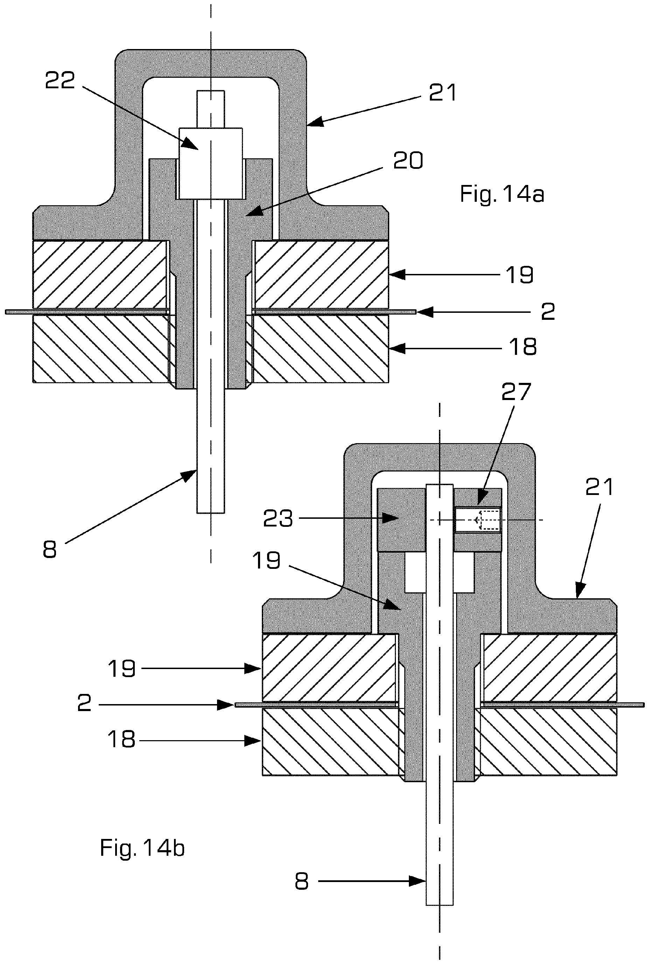

Figure 14a: Coupe d'une traversée de paroi (11) destinée à immobiliser l'extrémité du câble (8). La bride (18) comporte un perçage fileté en son centre destiné au vissage de la vis CHc (20). La bride (19) comporte un perçage lisse en son centre. Le câble (8) est immobilisé par la butée (22) préalablement sertie sur le câble avant son enfilage dans la vis (20) et le circuit de guidage (9). Le tube de guidage (9) est métallique et rigide. La traversée de paroi (11) est hermétiquement fermée par la cloche (21) métallique vissée et jointoyée sur la bride (19).

Figure 14b: Coupe d'une traversée de paroi (11) destinée à immobiliser l'extrémité du câble (8) par le serre-câble (23) qui comporte une vis de serrage (27) permettant de serrer ledit câble.

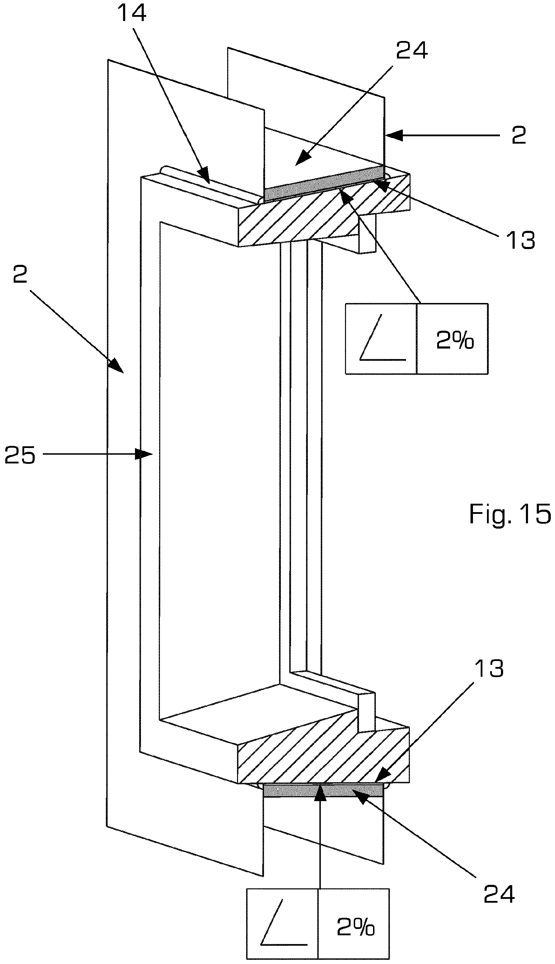

Figure 15 : Vue en coupe et en perspective d'un bloc-baie (25) monté dans un cadre d'embrasure (24) dont la conicité est de 2 %. Le bloc-baie est ceinturé par un joint plat identique au joint d'étanchéité (13) des bordures (7) des panneaux. L'insertion du bloc-baie comprimera le joint d'étanchéité complétant ainsi l'étanchéité du cadre (24). L'étanchéité est complétée par des joints en silicone (14). La souplesse du joint (13) permet d'amortir les vibrations des fenêtres dues aux bruits extérieurs.

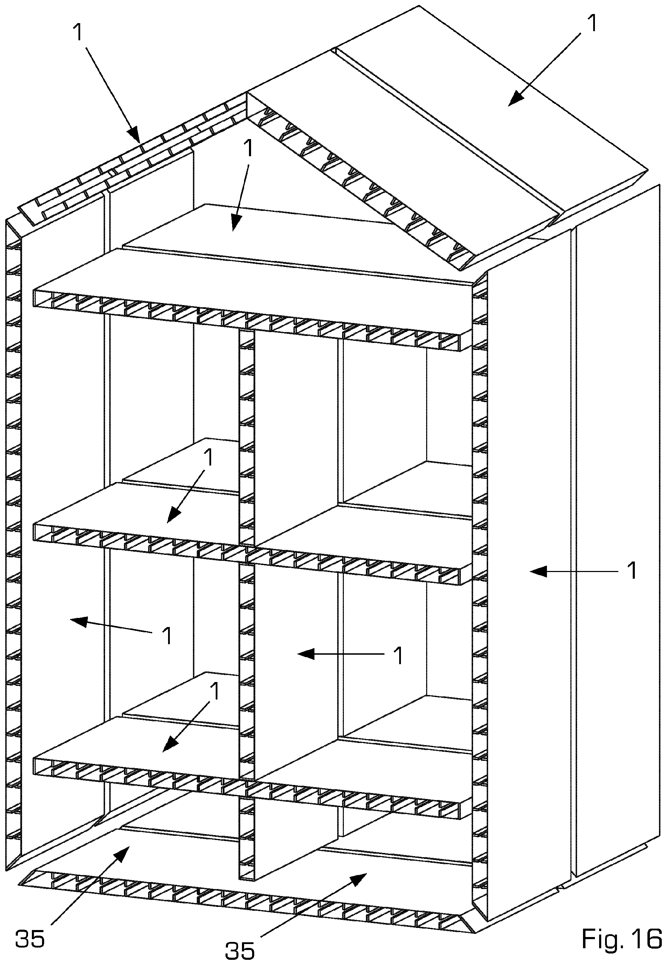

Figure 16 : Vue éclatée d'un bâtiment. La largeur des panneaux est soit adaptée à la largeur admissible d'un transport routier ou bien d'un conteneur, soit adaptée à la hauteur admissible sur une semi-remorque basse. Les vides sanitaires ou sous-sols (35) permettent de stocker des matériaux de récupération à capacité thermique massique élevée de type granules minéraux pleins et denses versés en vrac à travers lesquels les flux de chauffage et de refroidissement peuvent circuler.

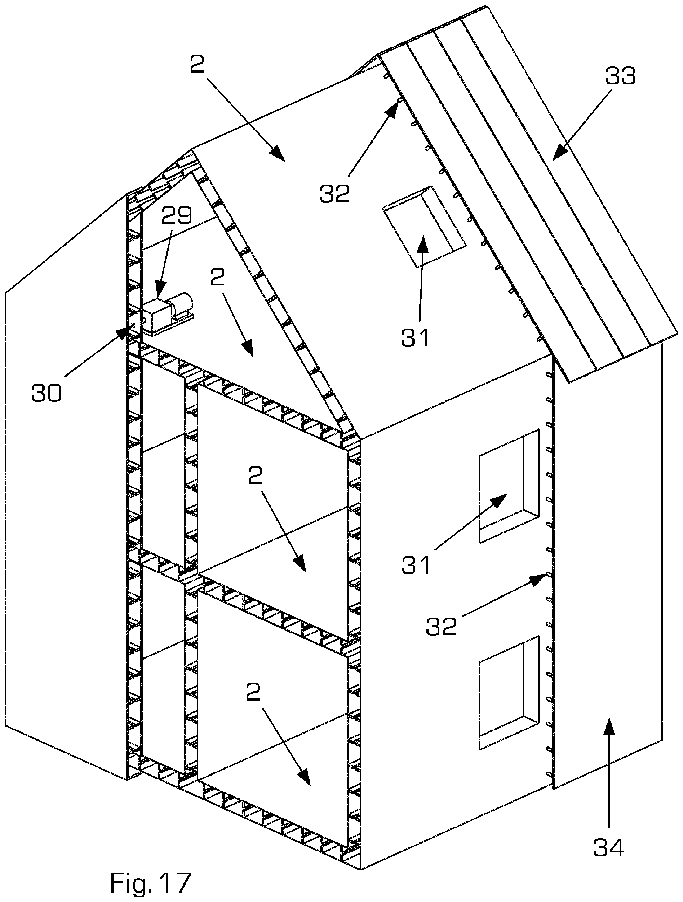

Figure 17 : Vue d'un bâtiment ouvert avec son mur de pignon en coupe transversale. L'enveloppe externe globale (2) est constituée d'un tissu en fibres synthétiques pétrochimiques ou minérales et d'un film polymère thermosoudable métallisé. Les cinq enveloppes internes (2) des pièces d'habitation ou sous-volumes sont constituées également par des tissus et des membranes. Les peaux peuvent également être constituées de tissus métalliques (3) recouverts par des feuillards (2) en aluminium. La pompe à vide (29) fait le vide d'air de la coque. Un seul orifice (30) est nécessaire et suffisant pour faire le vide de la totalité de la coque. Les trois ouvertures (31) pratiquées dans la coque sont destinées aux baies vitrées. Le bâtiment est couvert par des panneaux photovoltaïques (33) fixés sur les PIV par des supports (32), eux-mêmes fixés sur des plots en polymère souple adhérisés sur le tissu (3) et non représentés. Le bâtiment est également protégé par des panneaux de parement ou de bardage (34) fixés de la même façon sur les PIV. Les supports (32) peuvent être également adhérisés sur les plots polymériques. Les panneaux de parement (34) peuvent être recouverts d'un crépi dans le cas d'une maison d'habitation devant respecter les normes esthétiques en vigueur.

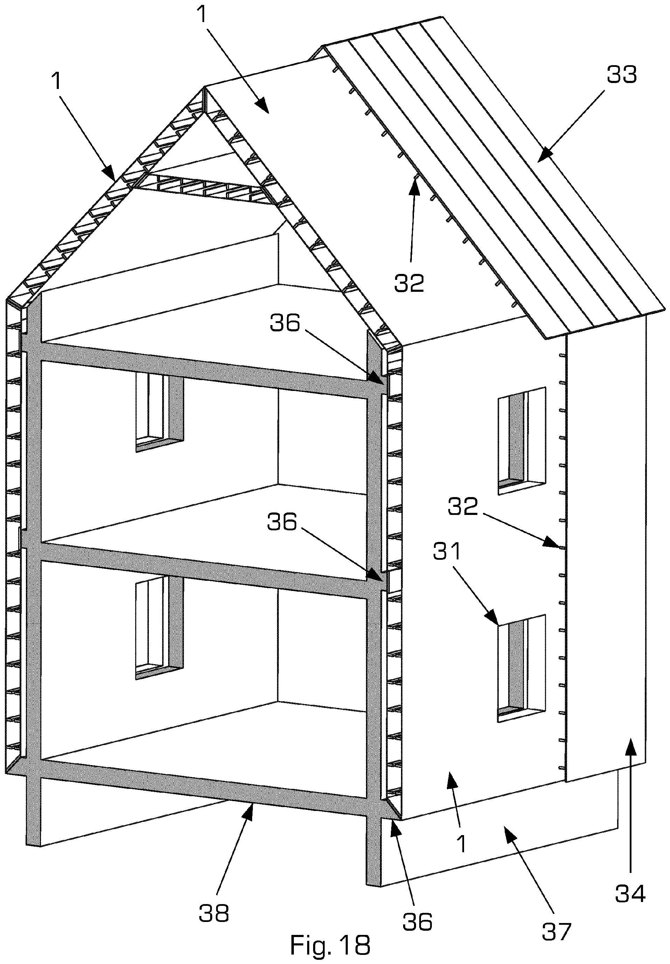

Figure 18 : Coupe d'un bâtiment traditionnel en dur (38) dont la structure originelle est constituée de matériaux minéraux et qui est isolée par une coque composée de PIV porteurs (1) qui mettent sous cloche le bâtiment. Ce bâtiment (38) est élevé sur des fondations (37) et le toit devenu inutile a été retiré. Les embrasures (31) correspondent aux fenêtres existantes du bâtiment. L'aménagement intérieur, les murs et les planchers sont conservés, ils sont utilisés comme accumulateurs de chaleur ou de fraîcheur. Des bandeaux (36) servant de consoles supports des PIV porteurs (1) sont ajoutés sur la structure existante du bâtiment. Ils peuvent être en béton ou en métal, fixes ou réglables. Ils intégreront les guidages (9) de câbles (8) et leurs surfaces de jonction avec les panneaux (1) seront étanches. Pour ce type de panneaux isolants, les surfaces de jonction ne se limitent pas aux chants des PIV mais se situent également à l'arrière des panneaux côté bâtiment. Cette coque composée de PIV porteurs qui met sous cloche le bâtiment est une superstructure.

### Réalisation de l'invention

### 1) Réalisation d'un panneau porteur isolant sous vide :

Le panneau isolant sous vide (1) de forme aplatie est composé d'une structure porteuse interne cellulaire enveloppée par une membrane étanche (2). La structure porteuse cellulaire est composée de tissus et de deux treillis (4) à grosses mailles sensiblement parallèles et entretoisés par des colonnes de faible section (6). Les deux treillis à grosses mailles sont composés de barres entrecroisées à profil rectangulaire (5) en lamelles de bois collées et orientées. La structure porteuse est ceinturée par des bordures (7) droites ou biseautées, circulaires ou segmentées, composées de plaques stratifiées en lamelles de bois orientées et collées.

L'ensemble structure cellulaire porteuse et bordure est contreventé par la couche tendue de tissu (3) à mailles très fines qui est recouverte d'un film polymère métallisé (2) donc étanche.

La membrane souple étanche (2) qui enveloppe la structure cellulaire est donc supportée par une ossature-support à mailles fines constituée du tissu (3) rigidifié par la pression atmosphérique et qui est pareillement supporté par une ossature-support à grosses mailles formée par le treillis (4) rigide. La couche isolante centrale est également composée d'une ossature-support non maillée composée de colonnes inclinées.

La membrane étanche n'admet aucune porosité ou interstice qui entraînerait une introduction d'air dans le volume interne sous vide. Pareillement, une coque sous vide démontable composée d'un assemblage de panneaux porteurs isolants sous vide n'admet aucune porosité ou interstice qui permettrait à l'air de s'introduire dans son volume interne.

L'enjeu est donc d'assembler sans aucune fixation mécanique extérieure ces PIV porteurs qui sont composés de membranes étanches fragiles. En effet, des fixations mécaniques ne pourraient être implantées que sur les membranes étanches, mais elles n'admettent aucun perçage.

Des liaisons mécaniques classiques par vis internes aux panneaux ne seraient accessibles qu'en démontant l'enveloppe étanche. Des liaisons électromagnétiques ou des blocages pneumatiques seraient trop coûteux.

Les panneaux ne peuvent pas être collés entre eux car la coque doit garder son caractère démontable pour être transportée.

L'invention consiste donc à procéder à l'assemblage étanche d'une pluralité de panneaux porteurs isolants sous vide sans fixation mécanique classique interne ou externe, sans collage et à bords ou chants jointifs.

La pression atmosphérique qui s'exerce sur les surfaces extérieures de la coque permet de presser l'une contre l'autre les jonctions sous vide d'air des panneaux. Toutefois, la sécurité n'est pas garantie en cas de rupture du vide d'air global. Une rupture de vide d'air avec des panneaux qui ne seraient plus contreventés serait catastrophique pour un bâtiment d'habitation. C'est pourquoi des liaisons mécaniques intérieures aux panneaux, accessibles par l'extérieur des panneaux et de la coque, sont nécessaires à la sécurisation de la stabilité de la coque.

### 2) Réalisation d'une coque isolante sous vide :

Le résultat de l'assemblage d'une pluralité de PIV porteurs (1) est une coque sous vide démontable constituée d'un volume global délimité par des membranes (2) soutenues par des tissus (3) et des structures composées de deux treillis (4) entretoisés par des colonnes et composés de barres (5) à section rectangulaire en lamelles de bois orientées collées.

Le volume global de la structure est formé par la membrane externe (2) supportée par le tissu (3) synthétique ou métallique.

Il est à noter que dans le cas d'un bâtiment, étant donné la masse légère d'une structure composée d'un film plastique métallisé, de tissus et de barres de bois, les calculs de sa résistance démontrent qu'elle peut être beaucoup plus légère que si elle devait supporter sa propre masse de matériaux de construction minéraux.

Seules les masses des panneaux de parement, de doublage, des planchers en bois recouverts de carrelage ou non, et des plafonds qui peuvent être des films tendus, seront entrées comme données de base dans les calculs. Toutes les autres données habituelles ne changent pas pour les calculs de résistance (le vent, la neige, les charges ...).

Les barres rectangulaires (5) des treillis (4) sont entrecroisées formant ainsi des treillis à grosses mailles qui vont supporter les tissus (3). Chaque surface de tissu couvrant une maille de treillis exposée à la pression atmosphérique sera ainsi réduite. De plus, si le tissu est collé sur les chants extérieurs des barres (5), sur les renforts de rives (12) et sur les bordures (7), les tensions cumulées des surfaces élémentaires des mailles de treillis ne seront pas transmises aux rives des tissus.

Le tissu tendu améliore le contreventement des treillis.

Les mailles des treillis peuvent être carrées ou triangulaires. Moins les mailles sont grosses, par exemple des mailles triangulaires de 280 mm de côtés, plus les surfaces élémentaires de tissu à soutenir sont petites et plus les barres à profil rectangulaire (5) et le tissu (3) peuvent être fins.

On peut constater que les mailles se resserrent de l'intérieur vers l'extérieur de la coque. Les treillis (4) ont des mailles de grandes dimensions, les tissus supportant les couches étanches ont des mailles de très petites dimensions. Les mailles de petites dimensions des tissus vont pouvoir supporter les films étanches souples.

Des ouvertures en vis-à-vis sont ménagées dans les peaux se faisant face formant ainsi une embrasure. Une embrasure (31) peut être de forme quelconque. La peau externe et les peaux internes sont reliées par les cadres (24) ceinturant chaque embrasure (31) ainsi que par les bordures (7) des panneaux.

Le volume fermé et étanche aux gaz, délimité par les peaux (2) et les cadres (24), est soumis à un vide poussé, inférieur à 1 hPa. La mise sous vide complète de gaz se fera quand les molécules de gaz enfermées dans les matériaux seront extraites. C'est pourquoi le volume interne de la coque est relié à une pompe à vide (29) de façon permanente. La qualité optimale des isolations thermique et phonique sera maintenue durant toute la durée de vie de la coque grâce à cette pompe à vide.

Le tissu (3) est composé de fibres synthétiques pétrochimiques ou minérales et supporte une couche de polymère métallisé thermosoudable ou de Copolymère d'Éthylène/ Alcool Vinylique (EVOH) qui forme une barrière particulièrement étanche aux gaz. Il est également possible de mouler à chaud une couche étanche (2) et assez épaisse de Polychlorure de Vinyle sur le tissu et de la métalliser par dépôt dynamique chimique. Dans ce cas, les jonctions étanches des plans de joints des panneaux ne seront pas métallisées, évitant ainsi l'utilisation du joint (13).

Les barres à profil rectangulaire (5) sont composées de panneaux de type OSB. Les barres sont renforcées par une armature composée d'une tige en acier ronde fixée à ses extrémités par deux écrous coniques (16) vissés dessus et qui pressent les bordures (7) sur la barre (5). Les écrous coniques sont encastrés dans les bordures (7). Ces armatures parcourent la longueur des barres en ondulant ou en zigzaguant et en se rapprochant alternativement d'un chant de la barre à l'autre chant opposé de la barre.

Les colonnes (6) en fibres liées par de la résine polyester et placées au droit des sommets des ondulations formées par les armatures (15), sont inclinées suivant des angles alternativement opposés afin de trianguler chaque poutre composée des deux barres (5) et des colonnes.

Les PIV porteurs (1) composés de tissus (2), de treillis (4) et de bordures (7) ont leurs chants soit biseautés soit droits. Les bordures (7) sont fixées sur les barres (5) des treillis (4) par tout moyens de liaison appropriés. Les bordures sont composées de panneaux de lamelles végétales orientées et collées sous pression, stratifié de type OSB.

Les PIV porteurs assemblés forment également la coque sous vide de gaz. On peut donc considérer que le volume global de vide est divisé en unités de vide qui peuvent être, en option, indépendantes du volume de vide global afin d'assurer une sécurité renforcée en cas de rupture accidentelle du vide d'air de celui-ci.

Les tissus (3) vont recouvrir les bordures (7). Les tissus en fibres synthétiques ou en fils métalliques de petits diamètres peuvent être tissés en très grande largeur, contrairement aux feuillards en acier ou en aluminium laminés dont les largeurs de fabrication sont réduites.

Le biseautage des bords des panneaux permet de les assembler avec une plus grande largeur de contact commune de leurs chants, améliorant ainsi l'étanchéité de la liaison entre deux panneaux. Cette étanchéité sera obtenue par l'insertion d'un joint souple (13) entre les deux chants et par le dépôt de joints en silicone (14) dans les angles formés par les panneaux de la coque et autour des blocs-baies. Plus la pression appliquée sur le joint (13) est importante, plus l'étanchéité sera efficace. Cette pression peut être mécanique mais sera de toute façon atmosphérique.

### 3) Réalisation de l'assemblage réversible des PIV et de la coque :

Le mode de réalisation décrit ici doit être considéré comme illustratif plutôt que restrictif. Ce mode d'assemblage n'est pas exclusif.

Les panneaux sous vide (1) sont assemblés entre eux chant contre chant grâce au câble (8) dont le parcours consiste, après que son extrémité ait été immobilisée par la butée sertie (22) dans la traversée de paroi (11), à traverser obliquement par un perçage (17) une première bordure (7) d'un premier panneau, puis une deuxième bordure du panneau jointif en ligne droite, ensuite de parcourir un arc de cercle à l'intérieur du panneau adjacent afin d'être réorienté vers la bordure qu'il vient de traverser, de retraverser obliquement en sens inverse la deuxième bordure puis la première bordure, de parcourir un arc de cercle à l'intérieur dudit premier panneau afin d'être réorienté vers la bordure qu'il vient de traverser, et de recommencer ainsi le cycle des ondulations jusqu'au serre-câble (23) dans la deuxième traversée de paroi (11).

Le guidage des câbles est donc réalisé grâce aux traversées de parois (11), aux trous obliques (17) et aux tubes guides-câble (9) qui sont alignés sur la ligne médiane des chants. Les formes ondulées du guidage et du câble sont identiques, que les chants soient droits ou biseautés. Les câbles sont donc guidés depuis l'extérieur par des circuits de guidage ondulant ou zigzaguant à travers les bordures de panneaux sur leurs lignes médianes. Il est donc possible d'enfiler les câbles (8) par l'extérieur des panneaux étanches et de la coque. Ces câbles vont parcourir les circuits de guidage en ondulant et en couturant les panneaux bord-à-bord. Ceci sans la moindre intervention manuelle à l'intérieur du panneau étanche.

Une fois tous les câbles de la coque enfilés et la structure contreventée mécaniquement, la coque est mise sous vide. Les jonctions des panneaux étant également mises sous vide, la pression atmosphérique extérieure à la coque s'exercera sur les chants de jonction des panneaux par l'intermédiaire des structures cellulaires porteuses des panneaux et de la coque. C'est la pression atmosphérique exercée sur la membrane extérieure (2) qui est transmise aux jonctions des panneaux. Ces pressions pressent ainsi fermement les panneaux entre eux. Les câbles-coutures (8) sécurisent les fixations sous vide des panneaux.

L'interconnexion entre les panneaux afin d'assurer la continuité du vide d'isolation et de rigidification est assurée grâce aux perçages (17) dans les bordures (7) desdits panneaux. L'ensemble des panneaux interconnectés entre eux forme ainsi une coque reliée à la pompe à vide (29) par un seul orifice (30).

Les centreurs (26) maintiendront les joints et les panneaux en place avant l'enfilage des câbles et avant la mise sous vide des jonctions. Ces centreurs poussés par des ressorts coulissent dans des fourreaux afin d'être escamotés avant d'être positionnés face à la douille femelle du panneau adjacent. Cette approche est nécessaire pour faire coulisser les surfaces de jonction l'une contre l'autre.

Des blocs en polymère souple (non représentés), équipés d'un insert métallique fileté, seront adhérisés en usine sur le tissu (3) avant le collage de celui-ci sur la structure porteuse cellulaire. Ces blocs souples serviront de fixations des squelettes, supports des panneaux de parement et de doublage. Ainsi les panneaux de parement pourront se dilater à la chaleur ou à l'humidité sans crainte de solliciter la peau (2).

Un petit bâtiment composé de ce type de coque peut être hors d'eau et hors d'air en une seule journée.

Une coque autostable enveloppante de ce type peut être utilisée en tant qu'isolation extérieure d'un bâtiment (38) en dur déjà existant ou en construction et non isolé. Cette coque sera couturée sur le bâtiment en dur et le mettra sous cloche en l'isolant. Les coutures étant placées entre des bandeaux (36) [consoles-supports] fixés ou intégrés aux murs et les faces arrières ou les chants des PIV porteurs (1). Ce système de fixation par coutures des panneaux PIV sur un bâtiment est thermiquement plus performant que les ossatures supports de PIV qui réduisent les espaces entre les panneaux et décrites dans les brevets cités en introduction.

Une coque autostable enveloppante de ce type peut être fixée sur une dalle de béton façonnée à l'identique d'une assise sous vide ainsi que sur des murs de terre crue s'élevant à hauteur de plafond de rez-de-chaussée. Les murs de terre crue accumulant la chaleur et la fraîcheur.

Précision sémantique : Un panneau indiqué comme étant autoporteur a une rigidité moindre qu'un panneau structurel porteur tel que celui proposé dans cette demande.

### Solutions optionnelles de sécurisation

Les circuits de guidage (9) peuvent être étanches et comporter un vide indépendant du volume de vide des panneaux. Dans ces circuits sous vide composés de trous obliques étanchéifiés (17) et de tubes étanches (9) soudés sur des platines (10), sont enfilés les câbles (8). Chaque circuit étanche du câble sera relié à la pompe à vide (29) par l'intermédiaire d'un tuyau souple fixé par un raccord étanche sur la cloche (21) d'une des deux traversées de paroi (11). L'étanchéité des platines (10) et des brides lisses (19), sera assurée par des joints souples (13).

Si les circuits de guidage disposent de leur propre vide, une fois l'ensemble des câbles d'un bâtiment enfilés et la structure contreventée mécaniquement, la mise sous vide de l'ensemble des circuits de guidage des câbles complétera le contreventement réalisé par les câbles-coutures.

Il est également possible que chaque panneau puisse avoir son propre vide assuré par une connexion indépendante à la pompe à vide grâce à un tuyau souple. En cas de rupture de vide d'air dans un des panneaux composant la coque, seul celui-ci sera affecté. Le volume de vide global est ainsi divisé en unités de vide indépendantes.

**Nomenclature**

| | | | |
|---|---|---|---|
| 1- | PIV porteur | 20- | Vis CHc percée |
| 2- | Membrane étanche | 21- | Cloche |
| 3- | Tissu | 22- | Butée sertie |
| 4- | Treillis | 23- | Serre-câble |
| 5- | Barre | 24- | Cadre embrasure |
| 6- | Colonne | 25- | Bloc-baie |
| 7- | Bordure ou chant | 26- | Centreur |
| 8- | Câble-couture | 27- | Vis pression |
| 9- | Tube guide-câble | 28- | Vis |
| 10- | Platine de fixation | 29- | Pompe à vide |
| 11- | Traversée de paroi | 30- | Prise de vide globale |
| 12- | Renfort de rive | 31- | Embrasure |
| 13- | Joint d'étanchéité | 32- | Support panneau |
| 14- | Joint silicone | 33- | Panneau photovoltaïque |
| 15- | Armature | 34- | Panneau de parement |
| 16- | Écrou conique | 35- | Vide sanitaire |
| 17- | Perçage guide-câble | 36- | Bandeau |
| 18- | Bride filetée | 37- | Fondations |
| 19- | Bride lisse | 38- | Bâtiment en dur |

## Revendications

1. Panneau porteur isolant sous vide de forme aplatie constitué d'une membrane souple étanche aux gaz enveloppant une structure rigide cellulaire,
**caractérisé en ce que** sa dite structure cellulaire est stratifiée en couches d'ossatures tissées et en treillis dont les mailles se resserrent à l'approche de ladite membrane souple étanche extérieure permettant de créer ainsi une zone barrière isolante centrale comportant plus de 99,7 % de vide de matière solide.

2. Panneau porteur isolant sous vide selon la revendication 1, **caractérisé en ce que** son enveloppe extérieure est composée d'un film étanche métallisé en polymère thermosoudable et supporté par un tissu en fibres synthétiques pétrochimiques ou minérales ou en fils métalliques.

3. Panneau porteur isolant sous vide selon la revendication 1, **caractérisé en ce que** deux treillis rigides (4) à grosses mailles sont disposés à l'intérieur du volume formé par l'enveloppe composée d'un film étanche supporté par un tissu et sont écartés par des colonnes (6), l'ensemble entretoisant ladite enveloppe et lui donnant du volume.

4. Panneau porteur isolant sous vide selon l'une quelconque des revendications 1 à 3, **caractérisé en ce que** les treillis (4) sont composés de barres (5) entrecroisées à profil rectangulaire fabriquées en lamelles de bois orientées collées, lesdits treillis sont ceinturés par des bordures (7) également fabriquées en lamelles de bois orientées collées.

5. Panneau porteur isolant sous vide selon l'une quelconque des revendications 1 à 4, **caractérisé en ce que** les barres (5) entrecroisées desdits treillis (4) en lamelles de bois orientées collées et dont le profil est rectangulaire, ont individuellement une armature (15) insérée dans leur masse qui parcourt en ondulant ou en zigzaguant leur longueur en approchant alternativement un chant de chaque barre à l'autre chant opposé de chaque dite barre créant ainsi un renfort interne résistant au fluage.

6. Panneau porteur isolant sous vide selon l'une quelconque des revendications 1 à 5 **caractérisé en ce que** lesdites colonnes (6) entretoisant les deux treillis (4) sont sensiblement disposées au droit des sommets des ondulations des armatures (15) et sont inclinées suivant des angles alternativement opposés afin de créer une pluralité de triangulations de chaque ensemble composé de deux barres (5) en miroir et de colonnes formant ainsi une poutre dite en treillis.

7. Panneau porteur isolant sous vide de forme aplatie constitué d'une membrane souple étanche aux gaz enveloppant une structure rigide cellulaire,
**caractérisé en ce qu'il** intègre dans tous ses chants latéraux et périphériques un système d'assemblage réversible permettant la jonction étanche à chants jointifs d'une pluralité de panneaux de nature semblable au dit panneau afin d'obtenir une coque sous vide autostable sans modification temporaire ou définitive des caractéristiques physiques intrinsèques desdits panneaux.

8. Panneau porteur isolant sous vide selon la revendication 7, **caractérisé en ce qu'**une pluralité desdits panneaux sont assemblés à l'aide de coutures internes constituées de câbles ondulants les ceinturant et dont chaque ondulation successive pénètre alternativement dans le chant d'un panneau puis dans le chant de son panneau adjacent.

9. Panneau porteur isolant sous vide selon la revendication 7, **caractérisé en ce que** ses chants sont traversés sensiblement orthogonalement dans leurs longueurs par des circuits tubulaires ondulants de guidage des câbles de couture et dont les ondulations sont alternativement réparties dans les chants dudit panneau et dans les chants de ses panneaux voisins.

10. Panneau porteur isolant sous vide selon l'une quelconque des revendications 1 à 9, **caractérisé en ce que** les plans de jonction des chants d'une pluralité de panneaux sont étanchéifiés par un joint (13) en polymère souple percé d'une pluralité de trous situés sur sa ligne sensiblement médiane et centrés sur les perçages (17) permettant le passage des câbles de couture.

11. Panneau porteur isolant sous vide selon l'une quelconque des revendications 1 à 10, **caractérisé en ce que** les extrémités des circuits guidant les câbles de coutures débouchent, grâce à des traversées de parois (11), à l'extérieur du volume formé par la coque constituée d'une pluralité de panneaux (1) de nature semblable.

12. Panneau porteur isolant sous vide selon l'une quelconque des revendications 1 à 11, **caractérisé en ce que** les câbles (8) utilisés pour couturer lesdits panneaux entre eux sont enfilés depuis l'extérieur du volume sous vide dudit panneau dans les circuits ondulants composés de traversées de parois (11), de tubes de guidage (9) et de perçages (17) pratiqués dans les bordures (7) desdits panneaux.

13. Panneau porteur isolant sous vide selon l'une quelconque des revendications 1 à 12, **caractérisé en ce qu'**il se fixe sur un bâtiment en dur (38) par une ou plusieurs coutures qui le lient à un ou plusieurs bandeaux (36) fixés ou intégrés au dit bâtiment et utilisés comme consoles-supports étanches.

14. Panneau porteur isolant sous vide selon l'une quelconque des revendications 1 à 13, **caractérisé en ce qu'**il peut constituer après assemblage avec une pluralité de panneaux de nature semblable, soit une coque sous vide enveloppante dite en cocon créant ainsi une structure de bâtiment complète, soit une coque sous vide couvrante permettant de mettre sous cloche un bâtiment en dur existant ou en construction, soit les deux pour agrandir un bâtiment en dur existant.

15. Panneau porteur isolant sous vide selon l'une quelconque des revendications 1 à 14, **caractérisé en ce que** si ses circuits de guidage des câbles de couture sont étanches et sont reliés directement à la pompe à vide (29) assurant le vide global de la coque, ils constituent des circuits sous vide indépendants du volume global sous vide de ladite coque.
